Europäisches Patentamt

European Patent Office    (11) Numéro de publication: **0 124 404**
**B1**
Office européen des brevets

(12)         **FASCICULE DE BREVET EUROPEEN**

(45) Date de publication du fascicule du brevet:        (51) Int. Cl.⁴: **A 01 K 27/00,** A 01 N 25/34
09.12.87

(21) Numéro de dépôt: **84400650.2**

(22) Date de dépôt: **02.04.84**

---

(54) **Collier insecticide et son procédé de fabrication.**

---

(30) Priorité: **14.04.83 FR 8306099**          (73) Titulaire: **Rombi, Max André, 67, rue Rossini,**
**29.11.83 FR 8319005**                        **F-06000 Nice (FR)**

(43) Date de publication de la demande:          (72) Inventeur: **Rombi, Max André, 67, rue Rossini,**
**07.11.84 Bulletin 84/45**                      **F-06000 Nice (FR)**

(45) Mention de la délivrance du brevet:          (74) Mandataire: **Bourgognon, Jean-Marie et al, Cabinet**
**09.12.87 Bulletin 87/50**                      **Flechner 22, Avenue de Friedland, F-75008 Paris (FR)**

(84) Etats contractants désignés:
**AT BE CH DE GB IT LI NL SE**

(56) Documents cités:
**FR - A - 2 180 576**
**FR - A - 2 206 051**
**FR - A - 2 386 253**
**FR - A - 2 400 839**

---

ACTORUM AG

## Description

La présente invention se rapporte aux colliers insecticides pour animaux.

A la différence des autres dispositifs insecticides classiques, un collier insecticide pour animaux doit présenter une certaine souplesse afin de pouvoir être bouclé autour du cou et doit être réalisé sous la forme d'une lanière. A l'exception des toutes premières formes de colliers insecticides constitués d'un collier classique auquel sont suspendus des générateurs de vapeurs insecticides, ou d'un harnais en cuir contenant des bandes insecticides solides et muni ou non d'orifices, les colliers insecticides sont formés de lanières extrudées en une composition contenant de la substance insecticide et du polychlorure de vinyle, la substance insecticide étant intégrée à la poudre de polychlorure de vinyle avant extrusion.

Faciles à fabriquer, économiques, de technologie éprouvée, ces bandes présentent néanmoins des inconvénients:

– Leur fabrication impose, à la tête de l'extrudeur, un passage à une température élevée (100 à 200°C) qui détruit une partie de l'insecticide, en entraînant souvent des odeurs désagréables, notamment si cet insecticide contient du soufre dans sa molécule. Ce problème devient même rédhibitoire dans le cas de molécules, telles que pyréthrines et pyréthroïdes, puisqu'elles sont en grande partie détruites à ces températures. La migration des insecticides peut se faire de plusieurs manières:

. dans le cas d'insecticides très volatils (FR-A 2 400 839), on assiste à une évaporation à travers les mailles du polymère, ce qui présente l'inconvénient d'une très grande sensibilité à la chaleur (qui déleste le collier de son contenu d'insecticide, réduisant ainsi dans une très grande proportion sa durée d'action) et à l'humidité (qui détruit l'insecticide);

. il peut également y avoir migration molécule à molécule (et non plus évaporation) d'un liquide huileux ou d'une poudre (insecticides peu volatils) à travers le polymère, ce phénomène présentant l'inconvénient inverse du précédent, en ce sens qu'il provoque l'emprisonnement d'une bonne partie des matières actives dans le polymère (épaisseur trop importante) et donc leur totale inactivité (il en va d'ailleurs toujours ainsi puisque tout insecticide possède une quantité rémanente inactive), ce qui devient grave dans le cas de produits contenant des pyréthroïdes très coûteux.

La demande de brevet français 2 386 253 décrit un collier ectoparasiticide mettant en œuvre une substance insecticide à faible tension de vapeur, mais, pour remédier à cette propriété qui semble un inconvénient, on propose de chauffer la composition insecticide liquide pour la sublimer et la transformer en un solide. Le collier insecticide, prêt à l'usage et non pas en voie de préparation, devient ainsi un collier à substance insecticide solide. Et cela nécessite de chauffer la substance insecticide liquide avec les inconvénients mentionnés précédemment.

Ces colliers souples, de faible solidité, excluent toute utilisation comme colliers de force et doivent toujours être accompagnés du collier nécessaire à retenir l'animal par une laisse ou une chaîne.

Bandes de plastique de couleurs marron, blanc, noir, bleu ou bien translucides, ces colliers ont une esthétique plutôt déplorable.

L'invention vise à améliorer ce type de colliers insecticides en éliminant les divers problèmes cités précédemment. En effet, le procédé de fabrication des colliers suivant l'invention requiert des températures tout à fait acceptables par les divers insecticides employés (en général il s'agit de la température ambiante). D'autre part, la structure des colliers est telle qu'un maximum d'insecticide est libéré et ce, de manière continue et infinitésimale.

En effet, dans le cas d'insecticides comparables à ceux de l'invention (très faible volatilité), un collier classique libère ses matières actives par migration à travers le plastique dont il est formé en totalité ce qui entraîne, comme mentionné ci-dessus, la totale inactivité d'une partie de l'insecticide qui se trouve bloqué par la trop forte épaisseur de plastique à traverser. Il s'agit en général des matières actives situées vers le centre de la lanière sur toute sa longueur: il existe ainsi un noyau de rétention d'insecticide.

L'invention pallie ces inconvénients.

Le collier suivant l'invention est défini aux revendications. La solidité des colliers suivant la revendication 2 permet si nécessaire, de les employer comme colliers de force et leur esthétique en fait de véritables accessoires pour animaux domestiques.

Comme l'introduction de la substance insecticide ne suppose plus un processus d'extrusion, mais s'effectue par imprégnation, par exemple à la température ambiante, on n'a plus à redouter les pertes et les dénaturations de l'insecticide coûteux soumis à des températures d'extrusion élevées. Bien que la substance insecticide soit peut volatile, en ayant par exemple des tensions de vapeur de l'ordre du millimètre de mercure à 200°C et au plus égale à $1,333 \times 10^{-5}$ Pa ($10^{-7}$ mm de mercure) à 20°C, elle migre cependant à travers la gaine qui est notamment en une matière polymère, par diffusion molécule à molécule, en étant invisible à l'œil nu (on s'aperçoit cependant parfois de cette migration en ce qu'elle forme une pellicule («microfilm») très légèrement huileuse sur la face extérieure des colliers dans le cas de compositions insecticides liquides.

Ce sont plusieurs phénomènes conjugués (artificiels et naturels) qui engendrent la migration de la solution insecticide:

– pressions internes de plusieurs natures:
. collier lui-même,
. absorption de l'humidité de l'air par des produits hygroscopiques (qui font également l'objet de l'invention),

. mouvements normaux de l'animal,

– usure de l'enveloppe extérieure par contact avec le pelage de l'animal,

– composition de la solution qui renferme un plastifiant du polymère-enveloppe.

En effet, lorsque le collier est autour du cou du chien, il subit des contraintes dues au mouvements normal de l'animal qui créent des pressions internes favorisant la migration de la substance insecticide à travers la gaine polymère. Cette dernière subit, de plus, un frottement continue par contact avec le pelage de l'animal, ce qui use la face de la gaine qui est en contact avec le pelage, et ce qui est aussi favorable à la sortie de la substance insecticide. Pour faciliter cette migration hors de la substance d'imprégnation, à travers la gaine polymère, il est aussi possible d'ajouter à la substance insecticide d'imprégnation un produit hygroscopique qui, en attirant l'humidité de l'air à travers la gaine, augmente la pression interne dans cette gaine, facilitant la sortie de l'insecticide. On utilise comme substances hygroscopiques des produits minéraux tels que le chlorure de calcium, le chlorure de magnésium, et des produits organiques tels que la lécithine, la choline et ses sels. Ces substances organiques sont intéressantes non seulement par leurs propriétés hygroscopiques, mais aussi parce qu'en migrant avec la substance insecticide, elles se révèlent être d'excellents adoucisseurs et protecteurs de la peau de l'animal et ce, justement aux endroits où elle est particulièrement sujette à irritations en raison du frottement.

En général, la substance hygroscopique représente de 1 à 10% en poids de la substance insecticide. Mais une des caractéristiques les plus importantes de ce collier, parce qu'elle facilite également la migration des matières actives, est que la solution insecticide contient un excipient choisi parmi les plastifiants (ou des mélanges de ces derniers) connus des divers polymères qui peuvent constituer l'enveloppe extérieure. Comme plastifiant, on peut utiliser notamment des adipates, des citrates, des phosphates, des succinates, des subérates. Ces plastifiants représentent de 5 parties à 95 parties en poids pour 100 parties de l'ensemble de la substance insecticide de l'excipient.

Ces plastifiants, utilisés généralement pour augmenter la souplesse d'un film polymère (par ajout avant polymérisation), permettent ici une meilleure diffusion de la solution active à travers le polymère enveloppe. En effet, la propriété principale d'un plastifiant vient du fait que, mélangé au monomère avant polymérisation, il occupe après réticulation du monomère les interstices laissés entre plusieurs mailles: c'est-à-dire que plus la quantité de plastifiant introduite est grande, plus la maille est élargie et par conséquent lâche d'où la plus grande souplesse du polymère plastifié.

Un phénomène analogue est observé dans le collier où le plastifiant élargit les mailles du polymère-enveloppe tout en diffusant de l'intérieur (matière-support) vers l'extérieur du collier, permettant ainsi un accroissement de la diffusion des autres produits (matières actives) hors du collier sur le pelage de l'animal.

Une fois sorties du collier à travers l'enveloppe polymère, ces solutions insecticides imprègnent les poils de l'animal à partir du cou et recouvrent ainsi de proche en proche le pelage de l'animal. Les produits qui les composent étant choisis pour leur insolubilité dans l'eau, l'animal traité se trouve ainsi revêtu en permanence d'un véritable «écran insecticide» pendant toute la période d'activité du collier.

C'est ce qui fait toute la différence entre ce collier et les systèmes éliminateurs d'insectes tels que les plaquettes insecticides qui agissent en phase vapeur grâce à des insecticides très volatils mais extrêmement sensibles à la chaleur et à l'humidité (réduction de la durée d'action par évaporation ou destruction du principe actif).

Parmi les matières-supports qui servent de support et de réservoir de substances insecticides actives en solutions, on peut citer le cuir, les matières textiles, telles que la laine, des feutres, des coagulés de cellulose, des non tissés, des tissus, des mousses de polymère, des cartons, du coton et, d'une manière générale, toute substance ayant une porosité suffisante pour être imprégnée (d'une manière générale, la porosité est supérieure à 0,20 g par centimètre pour une bande de 1,5 cm de large et de 2 mm d'épaisseur. On donne plus loin le tableau des taux d'imprégnation). On préfère de beaucoup utiliser des matières notamment textiles ayant, non seulement la souplesse excellente qui est nécessaire pour un élément constitutif d'un collier, mais aussi une résistance à la rupture à la traction suffisante d'au moins 60 kg dans un essai où elle est soumise à une traction en étant mise sous forme d'une bande de 1,5 cm de large et de 2 mm d'épaisseur. En général, on préfère des matières textiles ayant une résistance à la rupture à la traction d'au moins 80 kg, ou plus, ces valeurs étant obtenues longitudinalement et transversalement, sur des échantillons tels que mentionnés ci-dessus. Grâce à cela, le collier pour insecticide peut aussi servir de collier de force, alors que les colliers extrudés connus jusqu'ici ne présentaient pas une résistance à la traction suffisante à cet effet.

On peut aussi fixer ou marquer par un moyen quelconque sur la gaine du collier qui n'est pas en contact avec le cou de l'animal des impressions de reconnaissance ou des décors adhésifs.

Parmi les polymères qui, soit par enduction préalable, soit par ajout après imprégnation du matériau poreux, forment la gaine du collier, on peut citer des halogénures de polyvinyle, notamment le chlorure de polyvinyle, des polyuréthanes, des polymères du butadiène, du divinylbenzène et du styrène, des acétals polyvinyliques, des composés de polyvinylidène, des matières du type cellophane, des polymères de l'éthylène et du propylène, ainsi que des copolymères de ces deux produits, des polyacrylates, polymères et copolymères de l'acrylate de méthyle, de l'acrylate d'éthyle, du méthacrylate de méthyle et d'éthyle, des polyesters, des matières plastiques cellulosiques et des élastomères naturels comme le caoutchouc.

On a obtenu les résultats souhaités quand l'épaisseur de la gaine extérieure est inférieure à 1 mm environ et, de préférence, comprise entre 0,1 et 0,8 mm.

Alors que l'on préfère tout particulièrement comme matière support un coagulé de cellulose, c'est le chlorure de polyvinyle qui est le polymère préféré pour la gaine.

Le tableau I suivant donne des chiffres de perméabilité des polymères les plus utilisés et les plus connus vis-à-vis de plusieurs substances.

Il faut également noter que certains chercheurs ont pu prouver que si l'on faisait la comparaison de la perméabilité d'un produit organique (ou d'un mélange de produits organiques) en phase liquide et en phase vapeur (saturante) à travers un film plastique, on obtenait la plupart du temps des chiffres plus forts lorsque le film était au contact du mélange liquide que lorsqu'il n'était soumis qu'à l'action de la vapeur; ce qui présente un avantage pour ce collier puisque les compositions insecticides qu'il renferme sont liquides et peu volatiles.

Tableau I

| Polymère | Chlorure de polyvinyle | Polyéthylène | | Polyamides nylons/rilsans |
|---|---|---|---|---|
| Perméabilité vis-à-vis de | | | | |
| Eau* | 32 | 28 | | 200/31 |
| Azote** | 1,6 | 20 | | 0,2/0,42 |
| Oxygène** | 4 | 55 | | 0,38/1,6 |
| Gaz carbonique** | 32 | 265 | | 1,6/11 |
| Hexane*** | 4,2 | | | 5/ |
| Heptane*** | | 4600 | | |
| Benzène*** | | 7700 | | |
| Toluène*** | | | | 8,8/ |
| Tétrachlorure de carbone*** 8,5/ | | | | 9500 |
| Méthanol*** | 21 | 20 | | 590/ |
| Ethanol*** | | | | |
| Acétate d'éthyle*** | | 650 | | 1,1/ |
| Acétone*** | | 300 | | |
| Méthyléthylcétone*** | | | | 1,4/ |
| Acide acétique*** | | 58 | | |
| Ether dibutylique*** | | 1500 | | 2,3/ |
| Perméabilité vis-à-vis de | | | | |
| Eau | 1870 | 133 | 9 | 160 |
| Azote** | | 3 à 80 | 4,4 | 1,6 |
| Oxygène** | 0,05 à 0,2 | 15 à 250 | 23 | 4 |
| Gaz carbonique** | 0,25 | 75 à 370 | 92 | 32 |
| Hexane*** | 8.4 | | | |
| Heptane*** | | | | Polyesters |
| Benzène*** | 6,5 | | Eau | 30 |
| Toluène*** | | | Azote | 0,05 |
| Tétachlorure de carbone*** | 9,4 | | Oxygène | 0,3 |
| Méthanol*** | | | Gaz carbonique | 1 |
| Ethanol*** | 870 | | | |
| Acétate d'éthyle*** | 6,2 | | | |
| Acétone*** | 580 | | | |
| Méthyléthylcétone*** | | | | |
| Acide acétique*** | 590 | | | |
| Ether dibutylique*** | | | | |

*g/m². 24 heures, pour une épaisseur de 25 μm à température ambiante et sous pression atmosphérique.
**cm³. 10¹⁰/cm². s.cm Hg de pression de gaz pour une épaisseur de 1 mm à température ambiante.
***g/0.025 mm/24 heures/m².

Comme *substances insecticides, on fait appel de préférence aux pyréthroïdes et notamment aux suivants:*

- Allethrin = 2,2-dimèthyl-3-(2-méthyl-1-propényl)-cyclopropane carboxylate de 2-méthyl-4-oxo-3-(2-propényl)-2-cyclopenten-1-yle.
- Barthrin = 2,2-dimèthyl-3-(2-méthyl-1-propényl)-cyclopropane carboxylate de (6-chloro-1,3-benzodioxol-5-yl)méthyle.
- Bioresmethrin = 2,2,3-(2-méthyl-1-propényl) carboxylate de [5-(phényl-méthyl)-3-fura nyl]-méthyle.
- Bromethrin = 2-(2,2-dibromovinyl)-3,3-diméthylcyclopropane carboxylate de (5-benzyl-3-furyl)méthyle.
- Cyclethrin = 2,2-dimèthyl-3-(2-méthyl-propényl)-cyclopropane carboxylate de 3-(2-cyclopenten-1-yl)-2-méthyl-4-oxo-2-cyclopenten-1-yl.
- Dimethrin = 2,2,3-(2-méthyl-1-propényl) carboxylate de 2,4-dimèthylbenzyle.
- Pyresméthrin = trans (+)-3-carboxy-α,2,2-trimèthyl-cyclopropane acrylate de 3-[(5-benzyl-3-furyl)-méthyl]méthyle.
- Resméthrin = 2,2,3-(2-méthyl-2-propényl) carboxylate de (5-benzyl-3-furyl)méthyle.
- Tetramethrin = 2,2,3-(2-méthyl-1-propényl) carboxylate de (1,3,4,5,6,7-hexahydro-1,3-dioxo-2-2H-isoindol-2-yl)méthyle.
- K-othrin = 2,2-dimèthylcyclopropane carboxylate de (5-benzyl-3-furyl)-méthyl-trans-(+)-3-cyclopentylidène-méthyle.
- Permethrin (FMC 33 297) (NRDC 143 = 2,2-dimèthyl cyclopropane carboxylate de m-phénoxybenzyl cis-trans-(+)-3-(2,2-dichlorovinyle).
- Cinerin I = 2,2,3-(2-méthyl-1-propényl) carboxylate de 2-(2-butényl)-4-hydroxy-3-méthyl-2-cyclopenten-1-one.
- Pyrethrin I = 2,2,3-(2-méthyl-1-propényl) carboxylate de 4-hydroxy-3-méthyl-2-(2,4-pentadiényl)-2-cyclopenten-1-one.
- Cinerin II = 2,2,3-(2-méthyl-1-propényl) carboxylate de 2-(2-butényl)-4-hydroxy-3-méthyl-2-cyclopenten-1-one.
- Pyrethrin II = 2,2,3-(2-méthyl-1-propényl) carboxylate de 4-hydroxy-3-méthyl-2-(2,4-pentadiényl)-2-cyclopenten-1-one.
- Jasmolin I = 4′,5′-dihydropyréthrin-I.
- Jasmolin II = 4′,5′-dihydropyréthrin-II.
- Biothanometrin = 2,2-dimèthyl-3-(2-cyclopentylvinyl)-cyclopropane carboxylate de (5-benzyl-3-furyl)méthyle.
- Bioéthanométhrin = 2-(2,2-dichlorovinyl)-3,3-dimèthyl-cyclopropane carboxylate de (3-diphényl-éther)méthyle.
- Cypermethrin = 2-(2,2-dichlorovinyl)-3,3-dimèthyl-cyclopropane carboxylate de (3-diphényl-éther)cyanométhyle.
- Décamethrin = 2-(2,2-dibromovinyl)-3,3-dimèthyl cyclopropane carboxylate de (3-diphényl-éther)-cyanométhyle.
- ES-56 = 2,2,3-(2-méthyl-1-propényl) carboxylate de 2,3-dihydrofuranne.
- Fenpropanate (S-3206) = 2,2-diméthyl-3,3-diméthyl-cyclopropane carboxylate de (-3-diphényléther)cyanométhyle.
- Fenvalérate (S-5602) = [(p-chlorophényl) (isopropyl)] acétate de (-3-diphényléther)cyanométhyle.
- (S-5439) = [(p-chlorophényl) (isopropyl)] acétate de (3-diphényléther)méthyle.
- Cis-methrin = 2,2,3-(2-méthyl-1-propényl) carboxylate de 5-benzyl-3-furylméthyle.
- Phenothrin = 2,2,3-(2-méthyl-1-propényl) carboxylate de (3-phénoxybenzyl)méthyle.
- Deltaméthrin, cyanohydrin, cyanophenothrin, furethrin, bioallethrin, furamethrin, kadethrin.

On peut également utiliser des composés organo-phosphorés, tels que les suivants:
- Acéphate = O,S-diméthylacétylphosphoroaminothioate.
- Amidithion = S-(N-2-méthoxyéthylcarbamoylméthyl)-diméthylphosphorodithioate.
- Amiton = S-[2-(diéthylamino)éthyl]diéthyl-phosphorothioate.
- Athidation = O,O-diéthyl S-5-méthoxy-2-oxo-1,3,4-thiadiazol-3-yl-méthylphosphorodithioate.
- Azinphos-éthyl = O,O-diéthyl S-[(4-oxo-1,2,3-benzotriazine-3(4H)-yl)méthyl]phosphorodithioate.
- Azinphos-méthyl = O,O-diméthyl-S-[(4-oxo-1,2,3-benzotriazine-3(4H)yl)méthyl]phosphorodithioate.
- Azothoate = O,O-diméthyl-O-[p-(p-chlorophénylazo)-phényl]phosphorothioate.
- Bromophos = O-(4-bromo-2,5-dichlorophényl)-O,O-diméthylphosphorothioate.
- Bromophos-éthyl = O-(4-bromo-2,5-dichlorophényl)-O,O-diéthylphosphorothioate.
- Butonate = O,O-diméthyl-1-butyryl 1-butyryloxy.
- Carbophenothion = S[[(4-chlorophényl) thio]méthyl]O,O-diéthylphosphorodithioate.
- Chlorfenvinphos = 2-chloro-1-(2,4-dichlorophényl)-éthényl-phosphate de diéthyle.
- Chlormephos = S-chlorométhyl-O,O-diéthylphosphorodithioate.
- Chlorphoxim = 7-(2-chlorophényl)-4-éthoxy-3,5-dioxa-6-aza-4-phosphaoct-6-ène-8-nitrile-4-sulfure.
- Chlorprazophos = O,O-diéthyl-O-3-chloro-7-méthylpyrazolo[1,5a]pyrimidin-2-yl-phosphorothioate.
- Chlorpyrifos = O,O-diéthyl-O,3,5,6-trichloro-2-pyridylphosphorothioate.
- Chlorpyrifos-méthyl = O,O-diméthyl-O,3,5,6-trichloro-2-pyridylphosphorothioate.
- Chlorthiophos = O-2,5-dichloro-4-(méthylthio)-phényl-O,O-diéthylphosphorothioate.
- Coumaphos = O-3-chloro-4-méthylcouramin-7-yl O,O-diéthylphosphorothioate.
- Coumithoate = O,O-diéthyl O-(7,8,9,10-tétrahydro-6-oxo-6H-dibenzo[b,d]pyran-3-yl-phosphorothioate.
- Crotoxyphos = 1-phényléthyl (E)-3[(diméthoxyphosphonyl)-oxy]-2-buténoate.
- Cruformate = 2-chloro-4-(1,1-diméthyléthyl) phénylméthylméthylphosphoramidate.

Cyanofenphos = O-4-Cyanophényl-O-éthyl-phénylphosphonothioate.

Cyanaphos = O-4-cyanophényl O,O-diméthyl-phosphorothioate.

Cyanthoate = O,O-diéthyl S[N-(1-cyano-1-méthyléthyl)-carbamoylméthylphosphorothio-ate.

Demephion = Mélange de O,O-diméthyl O-2-méthylthioéthylphosphorotioate et de O,O-dimé-thyl-S-2-méthylthioéthylphosphorothioate.

Demeton = Mélange de O,O-diéthyl O-2-éthyl-thio-éthylphosphorothioate et de O,O-diéthyl-S-2-éthylthioéthylphosphorothioate.

Demeton-S-méthyl = O,O-diméthyl-S-2-éthyl-thioéthylphosphorothioate.

Demeton-S-méthyl sulfone = S-2-éthylsulfo-nyl-éthyl-O,O-diméthylphosphorothioate.

Demeton-S = O,O-diéthyl S-[2-(éthyl-thio)éthyl]phosphorothioate.

Demeton-O = O,O-diéthyl O-[2-(éthyl-thio)éthyl]phosphorothioate.

Demeton-O-méthyl = O,O-diméthyl O-[2-(éthylthio)éthyl]-phosphorothioate.

Dialifos = S-[2-chloro-1-(1,3-dihy-dro-1,3-dioxy-2H-isoindol-2-yl)éthyl] O,O-di-éthyl-phosphorodithioate.

Diazinon = O,O-diéthyl O-[6-méthyl-2-(1-méthyl-éthyl)-4-pyrimidi-nyl]phosphorothioate.

Dichlorfenthion = O,O-diéthyl O-(2,4-dichloro-phényl)-phosphorothioate.

Le O-2,4-dichlorophényl-O-éthylphényl-phosphonithioate.

Dichlorvos = 2,2-dichloroéthényl phosphate de diméthyle.

Dicrotophos = 3-(diméthylamino)-1-méthyl-3-oxo-1-propénylphosphate de diméthyle.

Dimefox = Oxyde de bis(diméthylamino)fluo-ro-phosphine.

Dimethoate = O,O-diméthyl-S-[2-(méthylami-no)-2-oxo-éthyl]phosphorodithioate.

1,3-di-(méthoxycarbonyl)-1-propèn-2-yl-dimé-thylphosphate = diméthyl 3-[(diméthoxyphosphi-nyl)oxy]-2-pentèndioate.

Phosphate de diméthyl-4-(méthylthio)phényle.

Dioxathion = S,S'-1,4-dioxane-2,3-diyl-O,O', O'-tétraéthyle di(phosphorodithioate)

Disulfoton = O,O-diéthyl-S-2-éthylthioéthyl-phosphorodithioate.

EPN = O-éthyl O-4-nitrophényl phénylphos-phonothioate.

Endothion = O,O-diméthyl S-(5-méthoxy-4-pyron-2-yl-méthyl) phosphorothioate.

Ethion = O,O,O',O'-tétraéthyl-S,S'-méthylène di(phosphorodithioate).

S-éthylsulfinylméthyl O,O-diisopropylphos-phorodithioate.

Ethoate-méthyl = O,O-diméthyl-S-(N-éthylcar-bamoyl-méthyl)phosphorodithioate.

Ethoprophos = O-éthyl-S,S-dipropylphospho-rodothioate.

Etrimfos = O-(6-éthoxy-2-éthyl-4-pyrimidi-nyl)-O,O-diméthylphosphorothioate.

Famphur = O,O-diméthyl O-p-(diméthylsulfa-moyl)-phénylphosphorothioate.

Fenchlorphos = O,O-diméthyl O-(2,4,5-trichlo-rophényl)-phosphorothioate.

Fensulfothion = O,O-diéthyl O-4-(méthylsulfi-nyl)phénylphosphorothioate.

Fenthion = O,O-diméthyl O-[3-méthyl-4-(mé-thylthio)-phényl]phosphorothioate.

Fonophos = O-éthyl S-phényléthylphosphono-dithioate.

Formothion = S-[2-(formylméthylamino)-2-oxoéthyl] O,O-diméthylphosphorodithioate.

Fospirate = diméthyl 3,5,6-trichloro-2-pyridyl-phosphate.

Fosthietan = diéthyl, 1,3-dithiétan-2-yl-idène-phosphoramidate.

Heptenophos = 7-chlorobicyclo[3,2,0]-hep-ta-2,6-dièn-6-yldiméthylphosphate.

Iodofenphos = O-2,5-dichloro-4-iodophé-nyl-O,O-diméthylphosphorothioate.

Isofenphos = 1-méthyléthyl 2-[[éthoxy]) 1-méthyl-éthyl)amino]phosphino-thioyl]oxy]-benzoate.

Leptophos = O-4-bromo-2,5-dichlorophényle O-méthylphénylphosphonothioate.

Lythidathion = O,O-diméthyl-S-(5-éthoxy-2,3-dihydro-2-oxo-1,3,4-thiadiazol-3-ylméthyl)phosphotodithioate.

Malathion = diéthyl(diméthoxyphosphino-thioyl)thiobutanedioate.

Mazidox = N,N,N',N'-tétraméthylphosphoro-diamidique acide.

Mecarbam = éthyl[[(diéthoxyphosphino-thioyl)thio]acétyl]carbamate de méthyle.

Mecarphon = N-méthylcarbonyl-N-méthyl-carbamoylméthyl O-méthylméthylphosphonodi-thioate.

Menazon = S-[(4,6-diamino-1,3,5-triazin-2-yl)-méthyl]O,O-diméthylphosphorodithioate.

Mephosfolan = diéthyl-4-méthyl-1,3-dithio-lan-2-yl-dinènphosphoramidate.

Methamidophos = O,S-diméthylphosphoram-dothioate.

Methidation = S[[5-méthoxy-2-oxo-1,3,4-thia-diazol-3(2H)-yl]méthyl] O,O-diméthylphosphorodithioate.

Methocrotophos = diméthyl cis-2-(N-méthoxy-N-méthyl)-carbamoyl)-1-méthylvinyl-phosphate.

2 sulfure de 2-méthoxy-4H-benzo-1,3,2-dioca-phosphorine.

Méthyl carbophenotion = S-[[(4-chlorophé-nyl)thio]-méthyl]O,O-diméthylphosphorodi-thioate.

Mevinphos = méthyl-3-[(diméthoxyphosphi-nyl)oxy]-2-butènoate.

Monocrotophos = diméthyl-1 méthyl-3-(mé-thylamino)-3-oxo-1-propénylphosphate.

Morphotion = O,O-diméthyl S-(morpholino-carbonyl-méthyl)phosphorodithioate.

Naled = 1,2-dibromo-2,2-dichloroéthylphos-phate de diméthyle.

Omethoate = O,O-diméthyl-S-[2-(méthylami-no)-2-oxo-éthyl]phosphorothioate.

Oxydemeton-méthyl = S-[2-(éthylsulfinyl)éthyl]O,O-diméthylphosphorothioate.

Oxydisulfoton = O,O-diéthyl S-[2-(éthyl-sulfinyl)-éthyl]phosphorodithioate.

Parathion = O,O-diéthyl O-4-nitrophényl-phosphorothioate.

Parathion-méthyl = O,O-diméthyl O-4-nitrophénylphosphorothioate.

Phenkapton = O,O-diéthyl S-(2,5-dichloro-phénylthio-méthyl)phosphorodithioate.

Phenthoate = éthyl α[(diméthoxyphosphinothioyl)thio]-benzèneacétate.

Phorate = O,O-diéthyl S-éthylthiométhylphosphorodithioate.

Phosalone = S-[(6-chloro-2-oxo-3) (2H)-benzoxazolyl(méthyl)] O,O-diéthylphosphorodithioate.

Phosfolan = diéthyl 1,3-dithiolan-2-ylidène-phosphoramidate.

Phosmet = S-[(1,3-dihydro-1,3-dioxo-2H-isoindol-2-yl)méthyl]O,O-diméthylphosphorodithioate.

Phosnichlor = O,O-diméthyl-0-4-chloro-3-nitrophénylphosphorothioate.

Phosphamidon = 2-chloro-3-(diéthylamino)-1-méthyl-3-oxo-1-propènylphosphate de diméthyle.

Phoxim = -[(diéthoxyphosphinothioyl)oxy]imino - benzèneacétonitrile.

Pirimiphos éthyl = O-[2-(diéthylamino)-6-méthyl-4-pyrimidinyl)]O,O-diéthylphosphorothioate.

Primiphos méthyl = O-[2-(diéthylamino)-6-méthyl-4-pirimidinyl)]O,O-diméthylphosphorothioate.

Profenofos = O-(4-bromo-2-chlorophényl) O-éthyl-S-propylphosphorothioate.

Propetamphos = (E)-1-méthyléthyl-3-[[(éthylamino)méthoxyphosphinothioyl]oxy]-2-butènoate.

Prothidathion = O,O-diéthyl-S-(2,3-dihydro-5-isopropyl-2-oxo-1,3,4-thiadiazol-3-ylméthyl)-phosphorodithioate.

Prothoate = O,O-diéthyl S-[2-(1-méthyléthyl)-amino-2-oxoéthyl]phosphorodithioate.

Quinalphos = O,O-diéthyl O-2-quinoxalinyl-phosphorothioate.

Quinothion = O,O-diéthyl-2-méthylquinolin-4-yl-phosphorothioate.

Quintiofos = O-éthyl-O-8-quinolyphényl-phosphorothioate.

Schradan = octaméthyldiphosphoramide.

Sophamide = O,O-diméthyl S-(N-méthoxyméthyl)-carbamoylméthylphosphorodithioate.

Sulfotepp = thiodiphosphate de tétraéthyle.

Sulprofos = O-éthyle O-(4-méthylthiophényl)-S-propylphosphorodithioate.

Temephos = O,O'-(thiodi-4,1-phénylène) O,O,O',O'-tétraméthyl di(phosphorothioate).

Tepp = diphosphate de tétraéthyle.

Terbufos = S-[[(1,1-diméthyléthyl)]thio méthyl]-O,O-diéthylphosphorodithioate.

Tetrachlorvinphos = trans-2-chloro-1-(2,4,5-trichlorophényl)vinyl phosphate de diméthyle.

O,O,O',O'-tétrapropyl dithiopyrophosphate- = thiodiphosphate de tétrapropyle.

Thiometon = O,O-diméthyl S-[2-(éthylthio)-éthyl]-phosphorodithioate.

Thionazin = O,O-diéthyl O-pyrazinylphosphorothioate.

Triazophos = O,O-diéthyl O-(phényl-1H-1,2,4-triazol-3-yl)phosphorothioate.

Trichloronate = O-éthyl O-2,4,5-trichlorophényléthylphosphonothioate.

Trichlorphon = diméthyl(1-hydroxy-2,2,2-trichloro-éthyl)phosphonate.

Vamidothion = O,O-diméthyl S-[2-(1-méthylcarbamoyl-éthylèneéthyl]phosphorothioate.

De préférence, la solution de substance insecticide est additionnée d'un agent synergiste, c'est-à-dire d'un produit qui n'est pas toxique, ou qui est très peu toxique aux doses auxquelles il est utilisé, mais qui sert à augmenter la toxicité de l'insecticide quand il est combiné à celui-ci. Ce sont surtout les insecticides pyréthroïdes qui sont additionnée de synergistes, tels que:

Sesamin = 5,5'-(tétrahydro-1H,3H-furo[3,4-C]-furan-1,4-diyl)bis-1,3-benzodioxole.

Sesamolin = 5-[4-(1,3-benzodiaxolol-5-yloxy)tétrahydro-1H,3H-furo[3,4-C]-furan-1-yl]-1,3-benzodioxole.

Piperonyl butoxyde = 5-[[2-(2-butoxyéthoxy)-éthoxy]-méthyl]-6-propyl-1,3-benzodioxole.

Sesamex = 5-[1-[2-(2-éthoxyéthoxy]-éthoxy]éthoxy]-1,3-benzodioxole.

Sulfoxide = 5-[2-(octylsulfinyl)propyl]-1,3-benzodioxole.

MGK 264 = N,octylbicycloheptènedicarboximide.

S 421 = octachlorodipropyl éther.

Outre les insecticides énumérés ci-dessus, on peut utiliser seuls ou dans les fomulations où ils apparaissent avec un ou plusieurs comigrants, ou en association avec un ou plusieurs autres insecticides et synergistes le cas échéant, des agents régulateurs de croissance qui sont des hormones juvéniles. Ces agents interrompent le développement des parasites des animaux, qui n'arrivent jamais à atteindre leur stade adulte. On évite ainsi leur reproduction et on les condamne à mourir au stade larvaire sans jamais pouvoir créer une infestation du chien ou du chat traité.

Parmi ces régulateurs de croissance, figurent notamment le méthoprène: (2E,4E)-11-méthoxy-3,7,11-triméthyl-2,4-dodécadiènoate d'isopropyle,

l'hydroprène: 3,7-11-triméthyldodéca-2,4-diènoate d'éthyle,

le triprène: S-éthyl(E,E)-11-méthoxy-3,7,11-triméthyl-2,4-dodécadiènethioate,

le diflubenzuron: N-[[(4-chlorophényl)amino]-carbonyl]-2,6-difluorobenzamide.

De préférence, ces régulateurs de croissance représentent, tout comme les autres substances insecticides, de 0,1 à 0,5% du poids du collier.

On peut additionner les substances insecticides de co-évaporants, tels que d'alcools, de cétones, d'esters légers, de benzène, de glycols, ou d'esters lourds, comme des maléates, des sébaçates, des laurates, des fumarates, des phtalates (ces esters lourds étant pour la plupart des plastifiant des polymères choisis), ou des hydrocarbures lourds, comme l'huile de vaselin, des paraffines, ainsi que diverses huiles végétales et animales, comme de l'huile de soja, de l'huile d'arachide, de l'huile de maïs. On peut additionner la substance insecticide liquide servant à l'imprégnation d'émulsionnants, de stabilisants, et de parfums.

L'invention vise aussi un procédé de fabrication d'un collier insecticide, qui consiste à imprégner une matière-support de la substance insecticide liquide déjà indiquée ci-dessus et à entourer la matière-support imprégnée de la substance insecticide liquide d'une gaine d'une nature et d'une épaisseur telles que la migration de la substance insecticide liquide à travers la gaine soit comprise entre 0,6 et 0,3 mg/jour/cm² de surface de lanière.

Suivant un premier mode opératoire, on choisit comme matière-support une matière poreuse ou fibreuse ayant en coupe une forme circulaire elliptique semi-circulaire, lenticulaire ou rectangulaire, que l'on enduit d'une fine pellicule de polymère destiné à être séché ou cuit, notamment de polychlorure de vinyle, ou de polyuréthanne, sur toute sa superficie, à l'exception de sa base, destinée à constituer la partie interne du collier venant en contact avec le pelage de l'animal. On imprègne la bande par la face non enduite à l'aide d'une solution.

Jusqu'à saturation du matériau poreux. Suivant un autre mode opératoire, on enduit la base libre de gaine polymère à l'aide d'une couche de colle et l'on colle, par leur face encollée, les deux éléments identiques préparés comme ci-dessus, pour obtenir ainsi un collier dont toutes les faces sont recouvertes d'une croûte de polymère.

Suivant un autre mode opératoire, on coud une bande à face libre, telle que préparée ci-dessus, avec une autre bande de même nature pour obtenir le collier. On peut également procéder par thermosoudage.

Suivant une variante, sur la face encollée libre, on peut coller une feuille de type tissu enduit laqué, matière plastique. Cette feuille peut être également soudée ou cousue.

Suivant un autre mode opératoire, on procède par rempliage, la bande poreuse en matière-support imprégnée étant entourée d'une pellicule de matière plastique formant gaine, par rempliage, la pellicule rempliée pouvant être d'ailleurs collée, soudée, ou cousue à la bande poreuse imprégnée formant matière-support.

Suivant un autre mode de réalisation, la matière-support imprégnée de la substance insecticide est entourée d'un enrobage en fils naturels ou synthétiques qui peut être tressé. Ce tressage est exécuté sur un métier à tresser suivant les règles de l'art (il ne s'agit en aucun cas d'un tissage) et peut aider à renforcer la résistance à la traction du collier. Bien entendu ce tressage peut s'appliquer aussi aux autres modes de réalisation puisque la maille de la tresse est suffisamment grande pour ne pas s'opposer à la migration de la substance insecticide.

Suivant une autre variante encore, la matière-support imprégnée est prise en sandwich entre deux feuilles d'un matériau du type tissu enduit, laqué, plastiques divers, d'une largeur telle qu'une fois les bords des feuilles rabattus, la matière-support se trouve complètement enveloppée par les deux feuilles qui peuvent être collées, soudées, ou reliées par coutures, le long de leur bord marginal.

Suivant une variante différente, des orifices sont ménagés dans le collier et débouchent, du côté poils, c'est-à-dire du côté destiné à venir en contact avec le pelage de l'animal. Ces orifices atteignent la matière-support et facilitent ainsi le suintement de celle-ci vers le pelage de l'animal.

On trouve donc parmi les colliers qui font l'objet de l'invention des bandes dont une face est partiellement ou totalement ajourée: c'est-à-dire qu'une partie du polymère enveloppe qui constitue la surface de la bande a été enlevée, laissant ainsi à nu la matière-support imbibée de la solution insecticide.

Ici, donc, le phénomène physique diffère puisqu'il ne s'agit plus d'une migration par diffusion molécule à molécule à travers une paroi polymère, mais d'une libération progressive par contact direct avec le support-réservoir de matière active.

Ces différences impliquent donc des précautions supplémentaires et une approche quelque peu différente de la fabrication des solutions actives. En effet, il est impératif d'éviter d'utiliser des solutions de liquides à faible viscosité comme il en était question dans la première variante de l'invention: ces liquides auraient tendance à sortir trop rapidement de la bande (durant la période de stockage par exemple) et à rendre totalement inefficace le collier au moment de son utilisation ou bien, au contraire, on pourrait assister à une libération massive et donc nuisible de solution sur le corps de l'animal.

Alors que les solutions insecticides des bandes de la première partie ont des viscosités allant de 50 à 100 centipoises (ou des valeurs proches de cette fourchette), on assiste à une augmentation de la viscosité des solutions dans le cas de bandes ajourées: on considère avoir atteint le but fixé lorsque la viscosité du liquide est supérieure à 500 cps et préférentiellement lorsqu'elle est proche de 5000 cps par valeurs supérieures ou inférieures (la viscosité est mesurée à 20°C sur un appareil du type viscosimètre à mesures comparatives du couple de rotation).

Cette augmentation de viscosité est obtenue par adjonction au mélange insecticide d'épaississants naturels ou artificiels (agar-agar, carraghènates, gommes diverses, ...) certains de ces épaississants développant également les qualités d'adhérence du mélange final à la matière-support dans sa masse (formation d'un mélange légèrement collant, ...).

Il est certainement possible d'appliquer après imprégnation un film facilement détachable sur la face libre du collier pour éviter les pertes pendant le stockage: ce film est appliqué sous forme d'un vernis à séchage rapide (à base de caséine par exemple).

Au dessin annexé, donné uniquement à titre d'exemple:

les figures 1 à 9 illustrent des variantes de collier suivant l'invention,

la figure 10 est une courbe illustrant la perméabilité d'un collier suivant l'invention à une substance insecticide en fonction du temps,

les figures 11 et 12 sont des vues éclatées et avant utilisation respectivement d'une boucle pour le collier suivant l'invention représenté partiellement à la figure 3 avec diverses manières de fixer un anneau pour une laisse.

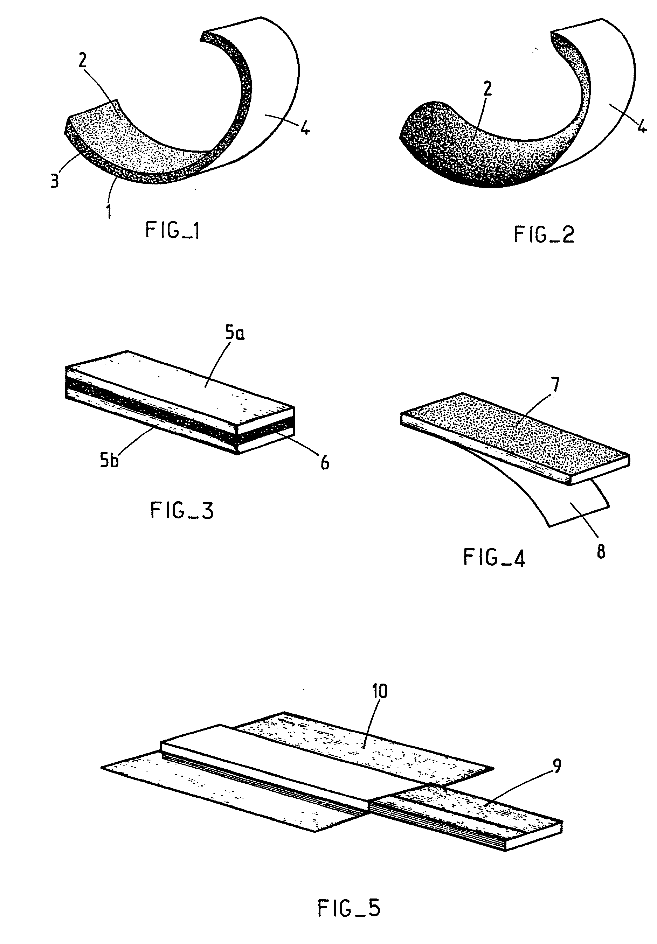

A la figure 1, une matière-support 1, en forme de lanière souple, imprégnée d'une substance insecticide, est revêtue sur sa face supérieure 2 et sur les côtés 3, d'une fine pellicule de polymère, tandis que sa face 4 est libre, en sorte que l'insecticide peut sortir de la matière-support, surtout lorsque le collier est soumis à des sollicitations et des secousses, alors qu'il est autour du cou de l'animal.

A la figure 2, la matière-support en forme de lanière a, en section droite, la forme d'un demi-cercle.

A la figure 3, deux colliers 5a, 5b du type suivant la figure 1 sont assemblés, par leurs faces libres, par interposition d'une couche de colle 6.

A la figure 4, une matière-support imprégnée 7 du type de la figure 1 est recouverte, sur la face libre, d'une feuille mince de tissu enduit.

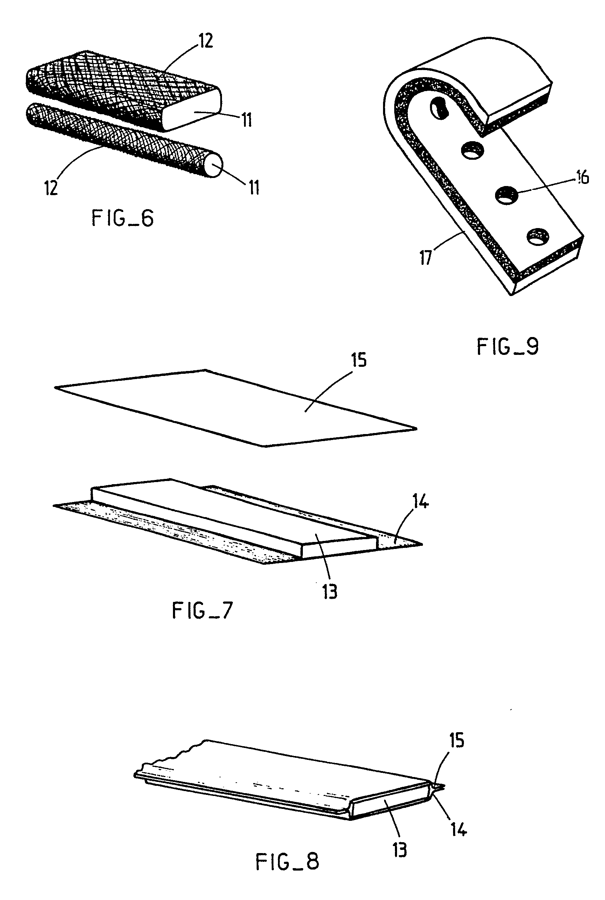

La figure 5 illustre un collier obtenu par rempliage. La matière-support 9, imprégnée de substance insecticide, est placée sur une feuille 10 plus large qui est rabattue ensuite au-dessus de la matière-support 9.

A la figure 6, on a représenté deux matières-supports 11 imprégnées de substance insecticide et entourées d'une tresse 12.

Les figures 7 et 8 illustrent un autre mode de réalisation de l'invention dans lequel la matière-support 13 imprégnée de substance insecticide est placée sur une feuille 14 un peu plus large que la matière-support 13, tandis qu'une autre feuille 15 est appliquée par le dessus et est reliée, comme le montre la figure 8, à la feuille 14 par ses bords marginaux. A la figure 9, des trous 16 arrivent jusqu'à la matière-support 17.

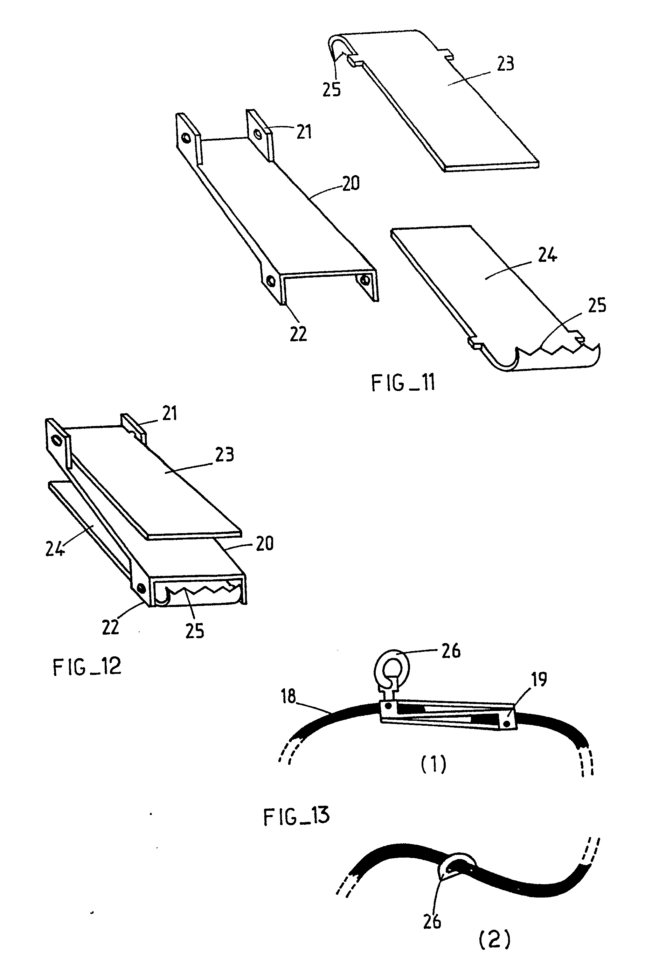

Dans sa forme définitive, le collier se présente (figure 13) comme une lanière 18 souple de coloris très divers dont la surface offre plusieurs types de reliefs gainés. Cette lanière 18 est accompagnée d'une boucle 19 présentée à part avec un système de fermeture étudié pour coincer ensemble les deux extrémités de la lanière. Ce système se compose d'une plaquette 20 intermédiaire munie de part et d'autre de pattes 21, 22 de montage à rotation de plaquettes 23, 24 à bord antérieur denté 25 (figures 11 et 12).

La pose du collier autour du cou des animaux à traiter (figures 11 et 12) se fait très aisément: on insère l'une des extrémités dans la boucle 19 pour la bloquer, puis on passe la lanière 18 autour du cou de l'animal de façon à ce que la seconde extrémité puisse être coincée dans la même boucle 19.

Il est prévu également, soit de fixer un anneau 26 à la boucle, soit de l'enfiler directement sur la lanière, afin qu'une laisse puisse être accrochée au collier. Ce dernier est ainsi utilisé comme collier de force puisque la boucle est étudiée pour offrir les meilleures qualités de résistance à l'ouverture et à l'arrachement.

Les exemples suivants illustrent l'invention. Dans ces exemples, toutes les formulations de mélange insecticide peuvent comprendre également un agent émulsionnant ou un stabilisant.

Exemple 1

Une bande parallélépipédique de coagulé de cellulose de 1,5 cm de largeur, 2 mm d'épaisseur est découpée en tronçons de 70 cm de longueur (destinés à devenir des colliers pour grands chiens), après avoir été imprégnée d'une solution insecticide. Pour cela, elle est plongée à l'aide d'un système comportant des poulies, dans un bain contenant le mélange insecticide suivant:

| | |
|---|---|
| – sumithrine (insecticide) | 0,1 à 1% |
| – pipéronyl butoxyde (synergiste) | 1 à 5% |
| – phtalate de dioctyle q.s.p. | 100%. |

Les tronçons de 70 cm sont posés sur des bandes de 0,1 mm d'épaisseur de tissu enduit de polyuréthanne, préalablement encollées (colle latex) et de taille légèrement supérieure à eux (largeur et longueur). Dans un deuxième temps, on recouvre l'ensemble bande de tissu/tronçon de carton de cellulose avec une autre bande de tissu de mêmes dimensions. Le tout est enfin pressé pour que le collage soit efficace.

Exemple 2

Une bande parallélépipédique de coagulé de cellulose de 1,5 cm de largeur et 1 mm d'épaisseur est imprégnée d'une solution insecticide de la même façon que la bande de l'exemple 1. Le mélange insecticide est le suivant:

| | |
|---|---|
| – perméthrine (insecticide) | 0,1 à 1% |
| (synergiste) – S 421 (éther octochlorodipropylique) | 1 à 5% |
| – huile de vaseline q.s.p. | 100%. |

La bande est alors posée sur une feuille de polyéthylène de 0,2 mm d'épaisseur de largeur telle qu'on puisse la «remplir» autour de la bande imprégnée. Une soudure locale le long de la feuille de polyéthylène permet de coller les deux bords ensemble. La bande maintenant remplie est alors coupée à chaud en tronçons de 35 cm destinés à devenir des colliers pour chats et petits chiens.

Exemple 3

Une bande parallélépipédique de 1,5 cm de largeur et de moins de 1 mm d'épaisseur en fil de coton tressé est imprégnée d'une solution insecticide de la même manière que dans l'exemple 1. Cette solution est la suivante:

- perméthrine (insecticide)          0,1 à 1%
- pipéronyl butoxyde (synergiste)       1 à 5%
- huile d'arachide q.s.p.             100%.

Cette bande est coupée en tronçons de 35 cm de longueur (destinés à devenir des colliers pour chats et petits chiens) qui sont posés sur des feuilles de tissu enduit de chlorure de polyvinyle préalablement encollées et de taille légèrement supérieure (largeur et longueur). L'épaisseur des feuilles est de 0,8 mm. Dans un second temps, on recouvre l'ensemble avec une autre feuille de tissu de mêmes dimensions et épaisseur. Le tout est pressé pour que le collage soit efficace.

Exemple 4
Une bande cylindrique en fil de coton tressé de 0,5 cm de diamètre est découpée en tronçons de 70 cm de longueur (colliers pour grands chiens) qui sont imprégnés par goutte à goutte à l'aide de la solution insecticide suivante:

- sumithrine (insecticide)           0,1 à 1%
- sesamex (synergiste)                 1 à 5%
- huile de soja q.s.p.                100%.

Ces tronçons sont disposés entre deux feuilles de tissu de 0,8 mm d'épaisseur enduit de polychlorure de vinyle préencollées (et de dimension supérieure en largeur). Le tout est alors pressé pour que le collage soit efficace.

Exemple 5
Une bande parallélépipédique de coagulé de cellulose de 1,5 cm de large et de 2 mm d'épaisseur est recouverte d'un fourreau en fils polyamide, polyester, nylon, fibres acryliques, etc., qui est tressé autour d'elle à l'aide d'un métier à tisser. La bande tressée est alors imprégnée par trempage (voir exemple 1) de la solution insecticide suivante:

- neopynamine (insecticide)          0,1 à 1%
- pipéronyl butoxyde (synergiste)       1 à 5%
- éthyldiglycol q.s.p.                100%.

Cette bande est alors découpée en tronçons de 70 cm et est employée telle quelle.

Exemple 6
On suit le même mode opératoire que pour l'exemple 5, mais la bande est ensuite «rempliée» à l'aide d'une feuille de polyéthylène de 2 mm d'épaisseur qui est soudée bord à bord pour que l'étanchéité soit totale.

Exemple 7
Une bande parallélépipédique de coagulé de cellulose déjà enduite sur 3 de ses faces (voir exemple 1) d'une couche de PVC (1,5 cm de largeur, 2,5 mm d'épaisseur) est imprégnée par un système de goutte à goutte de la solution insecticide suivante:

- diazinon (insecticide)              1 à 5%
- phtalate de dioctyle q.s.p.         100%.

Cette bande est ensuite collée par sa face non enduite sur une feuille de tissu enduit de PVC de même largeur et de 0,8 mm d'épaisseur. Le tout est enfin découpé en tronçons de 70 cm (destinés à devenir des colliers pour grands chiens).

Exemple 8
Une bande parallélépipédique de coagulé de cellulose déjà enduite sur trois de ses faces d'une couche de PVC (1,5 cm de largeur, 1 mm d'épaisseur) est imprégnée par un système de goutte à goutte de la solution insecticide suivante:

- diazinon (insecticide)              1 à 5%
- phtalate de dioctyle q.s.p.         100%.

Cette boucle est ensuite collée par sa face non enduite sur une bande jumelle déjà imprégnée. Le tout et alors découpé en tronçons de 35 cm (destinés à devenir des colliers pour chats et petits chiens).

Exemple 9
Une bande cylindrique formée par de la laine tressé (0,5 cm de diamètre) est imprégnée par trempage dans un bain (voir exemple 1) contenant la solution insecticide suivante:

- sumithrine (insecticide)           0,1 à 1%
- sesamex (synergiste)                 1 à 5%
- phtalate de dioctyle q.s.p.         100%.

Cette bande, coupée en tronçons de 35 cm de longueur, est collée entre deux feuilles de tissu de PVC de 0,8 mm d'épaisseur. Le tout est pressé pour parfaire le collage.

Exemple 10
Une bande de feutre de forme parallélépipédique et pré-enduite sur trois de ses faces d'une couche de PVC de 0,8 mm d'épaisseur est imprégnée à l'aide d'un système de goutte à goutte de la solution insecticide suivante:

- neopynamine (insecticide)          0,1 à 1%
- S421 [éther octachloro-dipropylique (synergiste)]       1 à 5%
- huile de soja q.s.p.               100%.

Une bande du même type que la bande précédente est percée de trous (en nombre, taille et formes diverses) et est imprégnée de la même manière. Les deux bandes sont alors collées par leurs faces non plastifiées (colle latex) puis découpées en tronçons de 70 cm de longueur (colliers pour grands chiens).

Exemple 11
Une bande de coagulé de cellulose de forme parallélépipédique et pré-enduite sur trois de ses faces d'une couche de PVC de 0,8 mm d'épaisseur est imprégnée à l'aide d'un système de goutte à goutte de la solution insecticide suivante:

- perméthrine (insecticide)      0,1 à 1%
- Nonarox 1030 NP (émulsifiant)      0,5 à 10%
- eau q.s.p.      100%.

(dans laquelle l'insecticide est totalement dissout dans l'émulsifiant avant tout ajout d'eau).

Après évaporation de l'eau par passage dans un fort courant d'air comprimé tiède, la bande est découpée en tronçons de 35 cm de longueur (colliers pour chats et petits chiens) et est utilisée telle quelle.

Taux d'imprégnation

Les tableaux suivants résument les taux d'imprégnation des différents matériaux qui constituent les matières-supports-réservoirs de matière active insecticide.

| Colliers de 70 cm | Taux d'imprégnation | Poids matière active |
|---|---|---|
| Exemple No. | (g/cm) | (g) |
| 1 | 0,20 à 0,30 | 14,0 à 21,0 |
| 4 | 0,27 à 0,40 | 18,9 à 28,0 |
| 5 | 0,27 à 0,33 | 18,9 à 23,1 |
| 6 | 0,27 à 0,33 | 18,9 à 23,1 |
| 7 | 0,20 à 0,30 | 14,0 à 21,0 |
| 10 | 0,29 à 0,38 | 20,3 à 26,6 |
| Colliers de 35 cm | Taux d'imprégnation | Poids matière active |
| Exemple No. | (g/cm) | (g) |
| 2 | 0,07 à 0,17 | 2,45 à 5,95 |
| 3 | 0,10 à 0,17 | 3,50 à 5,95 |
| 8 | 0,06 à 0,15 | 2,10 à 5,25 |
| 9 | 0,11 à 0,19 | 3,85 à 6,65 |

Les taux d'imprégnation sont donnés en unité de poids de matière active par unité de longueur de collier.

Exemple 12

L'exemple suivant, destiné à illustrer la perméabilité de la gaine extérieure, a été réalisé sur un collier expérimental de 70 cm de long se composant d'une matière-support en coagulé de cellulose recouvert d'une enveloppe de tissu enduit de chlorure de polyvinyle (PVC) de 0,8 mm d'épaisseur. La solution insecticide comprise dans ce collier expérimental était formée de :

- sumithrine (insecticide)      0,1 à 1%
- pipéronyl butoxyde (synergiste)      1 à 5%
- phtalate de dioctyle q.s.p.      100%.

On arrive ainsi à un poids de matière active de 17,5 g. Plusieurs colliers de ce type ont été mis dans de sévères conditions d'utilisation et on a pu ainsi déterminer par dosage les quantités de solution insecticide qui migraient à la surface de l'enveloppe extérieure.

La méthode de dosage comporte plusieurs étapes et se fait sur un morceau de collier de longueur connu ou, pour plus de précision, sur le collier, dans sa totalité. On procède de la manière suivante:

- Dissolution de la gaine extérieure et de son contenu de solution insecticide à l'aide d'un solvant connu du polymère utilisé (exemple: tétrahydrofuranne pour le PVC).
- Dissolution du support cellulosique interne et de son contenu de solution insecticide à l'aide d'un solvant approprié.
- Reprécipitation du polymère et du support et filtration afin de les éliminer pour obtenir un liquide ne contenant que la solution insecticide et les divers solvants utilisés.
- Dosage proprement dit de l'insecticide par chromatographie en phase gazeuse avec utilisation d'un étalon interne.

Le tableau suivant donne les chiffres de perméabilité en unité de poids par jour (g/jour).

| 0 | 1 | 2 à 4 | 5 à 16 | 19 à 24 | 25 à 27 | 28 à 29 | 30 | 31 | 32 à 34 | 35 à 38 |
|---|---|---|---|---|---|---|---|---|---|---|
| 0,110 | 0,106 | 0,100 | 0,099 | 0,098 | 0,096 | 0,094 | 0,092 | 0,090 | 0,088 | 0,086 |

| 39 à 44 | 45 à 53 | 54 à 61 | 62 à 73 | 74 à 88 | 89 à 102 | 103 à 116 |
|---------|---------|---------|---------|---------|----------|-----------|
| 0,095 | 0,084 | 0,083 | 0,082 | 0,081 | 0,080 | 0,079 |

| 117 à 124 | 124 à 129 | 130 à 131 | 132 | jours |
|-----------|-----------|-----------|-----|-------|
| 0,078 | 0,076 | 0,074 | 0,071 | perméabilité |

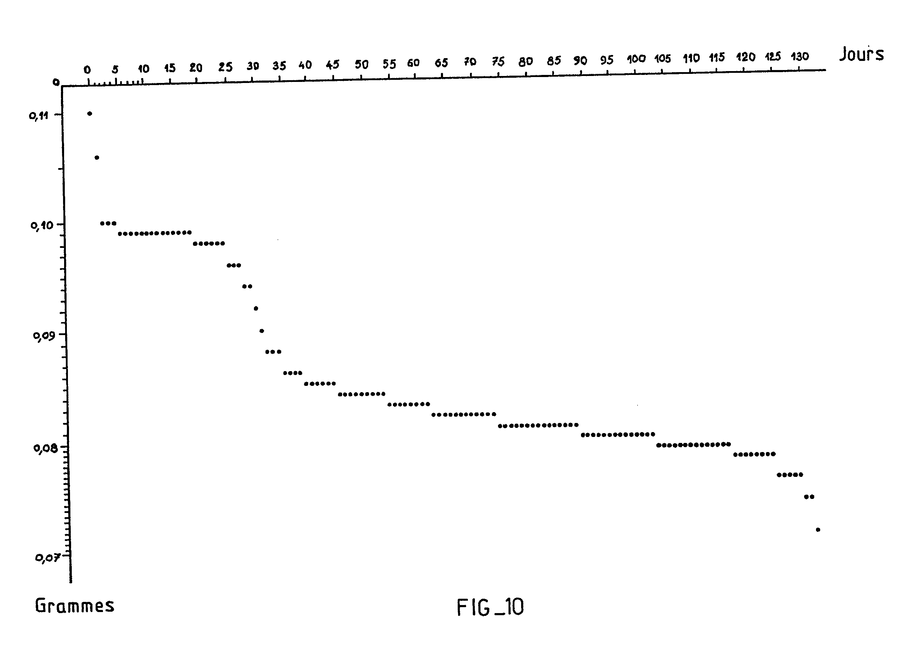

La courbe qui correspond à ce tableau (figure 10) permet de se rendre compte qu'au bout de 130 jours les doses de solution active qui sortent du collier diminuent notablement (alors qu'elles étaient restées dans des limites convenables pendant cette durée). On considère alors, bien que la solution sorte toujours, que le collier devient de moins en moins efficace et que, par conséquent, sa durée d'utilisation est de 130 jours environ.

Exemple 13

A l'aide d'un système de goutte à goutte, on imbibe une bande parallélépipédique (pré-enduite sur trois de ses faces d'une couche de polychlorure de vinyle), de 10 mm de largeur et de 2 mm d'épaisseur (longueur 65 ou 35 cm), à l'aide de la solution suivante:

– méthoprène: 0,1%
– phtalate de dioctyle q.s.p. 100% (co-migrant).

Exemple 14

On reprend l'exemple 13, si ce n'est que la solution d'imprégnation est la suivante:

– méthoprène: 0,3%
– perméthrine: 0,1 à 1% (insecticide)
– pipéronylbutoxyde: 1 à 5% (synergiste)
– phtalate de dioctyle: q.s.p. 100% (co-migrant).

On fait subir aux colliers des exemples 13 et 14 les mêmes essais que ceux qui ont été décrits précédemment. On obtient d'excellents résultats.

**Revendications**

1. Collier insecticide pour l'animal, qui, prêt à l'usage, est formé d'une lanière comprenant un élément en une matière-support imprégnée d'une composition insecticide liquide et une evenloppe en une matière polymère comportant soit une ouverture laissant une face de l'élément apparaître à l'extérieur, soit une partie perméable à la composition insecticide liquide, caractérisé en ce que la composition insecticide liquide comprend une substance insecticide ayant une tension de vapeur à 20°C sensiblement au plus égale à $1,333 \times 10^{-5}$ Pa ($10^{-7}$ mm de mercure) environ et, dans le cas où l'enveloppe comporte une ouverture de composition insecticide liquide, a une viscosité supérieure à 500 cps, tandis que dans le cas où l'enveloppe comporte une partie perméable à la composition insecticide liquide, cette partie de l'enveloppe a une nature, une conformation et une épaisseur telles que la migration de la substance insecticide liquide hors de l'élément à travers cette partie de l'enveloppe soit comprise entre 0,6 et 0,3 mg/jour/cm³ de surface de lanière.

2. Collier suivant la revendication 1, caractérisé en ce que la matière-support a une résistance à la rupture à la traction d'au moins 60 kg dans un essai où elle est sous forme d'une bande de 1,5 cm de largeur et de 2 mm d'épaisseur.

3. Collier suivant l'une des revendications 1 ou 2, caractérisé en ce que la matière-support est une matière textile, du cuir, une mousse de polymère, du carton ou du coton.

4. Collier suivant l'une des revendications 1 à 3, caractérisé en ce que la substance insecticide est une pyréthrine ou un pyréthroïde.

5. Collier suivant l'une des revendications 1 à 4, caractérisé en ce que, dans le cas d'une partie de l'enveloppe perméable à la composition insecticide liquide, la substance insecticide est additionnée d'un excipient choisi parmi les plastifiants du polymère qui constitue la gaine extérieure ou d'un mélange de ces plastifiants, à raison de 5 parties à 95 parties environ pour 100 parties en poids de l'ensemble de la substance insecticide et de l'excipient.

6. Collier suivant l'une des revendications 1 à 5, caractérisé en ce que, dans le cas où l'enveloppe comporte une partie perméable à la composition insecticide liquide, la substance insecticide est additionnée d'un produit hygroscopique qui représente de 1 partie à 10 parties environ en poids pour 100 parties en poids de la substance insecticide.

7. Collier suivant la revendication 5 ou 6, caractérisé en ce que la substance insecticide est additionnée d'un produit adoucissant et bénéfique pour la peau.

8. Collier suivant l'une des revendications précédentes, caractérisé en ce que l'enveloppe est en polychlorure de vinyle ou en polyuréthanne et a une épaisseur comprise entre 0,1 à 0,8 mm environ.

9. Procédé de fabrication d'un collier suivant l'une des revendications précédentes qui consiste à imprégner une matière-support d'une composition insecticide liquide et à envelopper la matière-support imprégnée d'une enveloppe en une matière polymère qui comporte soit une ouverture laissant une face de l'élément apparaître à l'extérieur, soit une partie perméable à la composition insecticide liquide, caractérisé en ce qu'une composition insecticide liquide comprenant une substance insecticide ayant une tension de vapeur au plus égale à $1,333 \times 10^{-5}$ Pa ($10^{-7}$ mm de mercure) environ à 20°C est choisie, et, dans le cas où l'enveloppe comporte une ouverture de composition insecticide liquide, cette substance a en outre une viscosité supérieure à 500 cps, tandis que dans le cas où l'enveloppe comporte une partie perméable à la composition insecticide liquide, cette partie perméable de l'enveloppe est choisie de façon que la migration de la substance insecticide à travers elle soit comprise entre 0,6 et 0,3 mg/jour/cm³ de surface de lanière.

## Patentansprüche

1. Ein Anti-Insekten-Halsband für Tiere, das in gebrauchsfertigem Zustand von einem Riemen gebildet ist, zu dessen Bestandteilen ein mit einem flüssigen insektiziden Mittel getränktes Trägermaterial und eine aus einem Polymer bestehende Hülle gehören, die entweder eine eine Fläche des Trägermaterials nach aussen freigebende Öffnung oder einen für das flüssige insektizide Mittel durchlässigen Abschnitt aufweist, dadurch gekennzeichnet, dass das flüssige insektizide Mittel einen insektiziden Stoff mit einem Dampfdruck bei 20°C von im wesentlichen höchstens etwa $1,333 \times 10^{-5}$ Pa ($10^{-7}$ mm Quecksilbersäure) aufweist, und bei Verwendung einer eine Öffnung aufweisenden Hülle das flüssige insektizide Mittel eine Viskosität höher als 500 cps hat, wogegen bei Verwendung einer Hülle mit einem für das flüssige insektizide Mittel durchlässigen Abschnitt dieser Abschnitt der Hülle von solcher Art, Gestalt und Dicke ist, dass die Wanderung des flüssigen insektiziden Stoffes aus dem Trägermaterial heraus durch diesen Abschnitt der Hülle hindurch zwischen 0,6 und 0,3 mg/Tag/cm³ Riemenoberfläche beträgt.

2. Das Halsband nach Anspruch 1, dadurch gekennzeichnet, dass das in Form eines Streifens mit einer Breite von 1,5 cm und mit einer Dicke von 2 mm vorliegende Trägermaterial eine Zerreissfestigkeit von wenigstens 60 kg aufweist.

3. Das Halsband nach Anspruch 1 oder 2, dadurch gekennzeichnet, dass das Trägermaterial ein textiles Material, Leder, ein Polymerschaumstoff, Karton oder Baumwolle ist.

4. Das Halsband nach einem der Ansprüche 1 bis 3, dadurch gekennzeichnet, dass der insektizide Stoff ein Pyrethrin oder ein Pyrethroid ist.

5. Das Halsband nach einem der Ansprüche 1 bis 4, dadurch gekennzeichnet, dass bei Verwendung einer Hülle mit einem für das flüssige insektizide Mittel durchlässigen Abschnitt, dem insektiziden Stoff ein Stoffträger zugesetzt ist, der ausgewählt ist aus den Weichmachern des die äussere Hülle bildenden Polymers oder aus einem Gemisch solcher Weichmacher, und ein Verhältnis von etwa 5 bis 95 Stoffträger zu 100 Gewichtsteile der Summe aus Insektizid und Stoffträger vorgesehen ist.

6. Das Halsband nach einem der Ansprüche 1 bis 5, dadurch gekennzeichnet, dass bei Verwendung einer Hülle mit einem für das flüssige insektizide Mittel durchlässigen Abschnitt dem insektiziden Stoff ein hygroskopischer Stoff zugesetzt ist, dessen Anteil etwa 1 bis 10 Gewichtsteile auf 100 Gewichtsteile insektizider Stoffe ausmacht.

7. Das Halsband nach Anspruch 5 oder 6, dadurch gekennzeichnet, dass dem insektiziden Stoff ein die Haut geschmeidig machendes und pflegendes Mittel zugesetzt ist.

8. Das Halsband nach einem der vorhergehenden Ansprüche 1 bis 7, dadurch gekennzeichnet, dass die Hülle aus Polyvinylchlorid oder Polyurethan besteht und eine Dicke zwischen etwa 0,1 und 0,8 mm aufweist.

9. Ein Verfahren zur Herstellung eines Halsbandes nach einem der vorhergehenden Ansprüche, wobei ein Trägermaterial mit einem flüssigen insektiziden Mittel getränkt wird und das imprägnierte Trägermaterial in einer Hülle aus einem Polymer eingehüllt wird, die entweder eine eine Fläche des Trägermaterials nach aussen freigebende Öffnung oder einen für das flüssige insektizide Mittel durchlässigen Abschnitt aufweist, dadurch gekennzeichnet, dass als flüssiges insektizides Mittel ein insektizider Stoff mit einem Dampfdruck von höchstens etwa $1,333 \times 10^{-5}$ Pa ($10^{-7}$ Quecksilbersäule) bei 20°C gewählt wird, und bei Verwendung einer Hülle mit einer Öffnung für das flüssige insektizide Mittel dieser Stoff ferner eine Viskosität höher als 500 cps aufweist, wogegen bei Verwendung einer Hülle mit einem für das das flüssige insektizide Mittel durchlässigen Abschnitt dieser durchlässige Abschnitt der Hülle so gewählt wird, dass die Wanderung des insektiziden Stoffes durch diesen durchlässigen Abschnitt hindurch zwischen 0,6 und 0,3 mg/Tag/cm³ Riemenoberfläche ausmacht.

## Claims

1. Insecticidal collar for an animal which, ready for use, is formed from a band incorporating a support material element impregnated with a liquid insecticidal composition and a polymer material envelope having either an opening leaving one face of the element visible to the outside, or a part which is permeable to the liquid insecticidal composition, characterized in that the liquid insecticidal composition comprises an insecticidal substance having a vapour tension at 20°C substantially at the most equal to $1.333 \times 10^{-5}$ Pa approximately ($10^{-7}$ mm of mercury) and in the case where the envelope has a liquid insecticidal composition opening a viscosity exceeding 500 cps, whilst in the case where the envelope has a part permeable to the liquid insecticidal composition, said envelope part has a nature, shaping and thickness such that the migration of the liquid insecticidal substance out of the element and through said envelope part is between 0.6 and 0.3 mg/day/cm³ of band surface.

2. Collar according to claim 1, characterized in that the support material has a tensile breaking strength of at least 60 kg in a test where it is in the form of a 1.5 cm strip and has a thickness of 2 mm.

3. Collar according to one of the claims 1 or 2, characterized in that the support material is a textile material, leather, polymer foam, cardboard or cotton.

4. Collar according to any one of the claims 1 to 3, characterized in that the insecticidal substance is a pyrethrin or a pyrethroid.

5. Collar according to any one of the claims 1 to 4, characterized in that the case where part of the envelope is permeable to the liquid insecticidal composition, to the insecticidal substance is added an excipient chosen from among the plasticizers of the polymer forming the outer sheath of a mixture of said plasticizers at a rate of 5 to 95 parts approximately per 100 parts by weight of the total of the insecticidal substance and the excipient.

6. Collar according to any of the claims 1 to 5, characterized in that the case where the envelope has a part permeable to the liquid insecticidal composition, to the insecticidal substance is added a hygroscopic product representing 1 to 10 parts approximately by weight per 100 parts by weight of the insecticidal substance.

7. Collar according to claims 5 or 6, characterized in that to the insecticidal substance is added a skin-beneficial and softening product.

8. Collar according to any one of the preceding claims, characterized in that the envelope is made from polyvinyl chloride or polyurethane and has a thickness between 0.1 and 0.8 mm approximately.

9. Process for the production of a collar according to any one of the preceding claims comprising impregnating a support material with a liquid insecticidal composition and enveloping the impregnated support material with an envelope formed by a polymer material having either an opening such that the face of the element is visible to the outside, or a part which is permeable to the liquid insecticidal composition, characterized in that a liquid insecticidal composition comprising an insecticidal substance having a vapour tension at the most equal to $1.333 \times 10^{-5}$ Pa approximately ($10^{-7}$ mm of mercury) at 20°C is chosen and in the case where the envelope has a liquid insecticidal composition opening, said substance also has a viscosity exceeding 500 cps, whereas in the case where the envelope has a part permeable to the liquid insecticidal composition, said permeable part of the envelope is chosen in such a way that the migration of the insecticidal substance through it is between 0.6 and 0.3 mg/day/cm³ of band surface.

FIG_1

FIG_2

FIG_3

FIG_4

FIG_5

FIG_6

FIG_9

FIG_7

FIG_8

FIG_10

25

23

21

20

24

25

22

FIG_11

21

23

24

20

22    25

FIG_12

26

18    19

(1)

FIG_13

26

(2)